(19) Europäisches Patentamt
European Patent Office
Office européen des brevets

(11) **EP 4 557 195 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
**G06Q 10/083** $^{(2024.01)}$

(21) Application number: **23839649.3**

(22) Date of filing: **12.07.2023**

(86) International application number:
**PCT/JP2023/025730**

(87) International publication number:
**WO 2024/014477 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 US 202263389533 P**

(71) Applicant: **Panasonic Intellectual Property Management Co., Ltd.**
**Kadoma-shi, Osaka 571-0057 (JP)**

(72) Inventors:
• **KAWAMOTO, Hirokazu**
**Kadoma-shi, Osaka 571-0057 (JP)**
• **MURAMOTO, Eiichi**
**Kadoma-shi, Osaka 571-0057 (JP)**

(74) Representative: **Novagraaf International SA**
**Chemin de l'Echo 3**
**1213 Onex, Geneva (CH)**

(54) **INFORMATION PROCESSING METHOD, PROGRAM, AND INFORMATION PROCESSING TERMINAL**

(57) An information processing method includes: executing, based on an operation parameter of a moving body (1) that accommodates a person or a delivery item, a simulation for a movement of the moving body (1) and a transport demand for the person or the delivery item (S12); outputting a first evaluation result of evaluating an execution result of the simulation using at least a safety index for an operation of the moving body (1) (S13); obtaining request information indicating a request about the operation of the moving body (1), the request being made with respect to the first evaluation result (S14); executing the simulation in accordance with the request information obtained (S15); and outputting a second evaluation result of evaluating an execution result of the simulation using at least the safety index for the operation of the moving body (S16).

FIG. 6

```
          Start
            │
            ▼
  ┌──────────────────────┐  S11
  │ Obtain operation     │
  │ parameters of        │
  │ moving bodies        │
  └──────────────────────┘
            │
            ▼
  ┌──────────────────────┐  S12
  │ Execute simulation   │
  └──────────────────────┘
            │
            ▼
  ┌──────────────────────┐  S13
  │ Output first         │
  │ evaluation result    │
  └──────────────────────┘
            │
            ▼
  ┌──────────────────────┐  S14
  │ Obtain request       │◄─┐
  │ information          │  │
  └──────────────────────┘  │
            │                │
            ▼                │
  ┌──────────────────────┐  S15  │
  │ Execute repeated     │  │
  │ simulation           │  │
  └──────────────────────┘  │
            │                │
            ▼                │
  ┌──────────────────────┐  S16  │
  │ Output second        │  │
  │ evaluation result    │  │
  └──────────────────────┘  │
            │                │
            ▼                │
       ╱ Operation ╲  S17    │
      ╱ specifications ╲ No  │
     ⟨ and service      ⟩────┘
      ╲ specifications ╱
       ╲ determined? ╱
            │ Yes
            ▼
  ┌──────────────────────┐  S18
  │ Output operation     │
  │ specifications and   │
  │ service specifications│
  └──────────────────────┘
            │
            ▼
          End
```

Processed by Luminess, 75001 PARIS (FR)

## Description

[Technical Field]

The present invention relates to information processing methods, programs, and information processing terminals for conducting mobility service simulations.

[Background Art]

With recent changes in environments surrounding the markets as represented by Connected, Autonomous, Shared, and Electric (CASE), a demand for mobility services is expanding. Meanwhile, a mobility service consists of a wide range of elements (service factors), so that optimizing a mobility service requires preliminary design and evaluation of the mobility service.

Non-Patent Literature (NPL) 1 describes utilizing simulations for mobility service design and evaluation in order to introduce and improve a mobility service.

Patent Literature (PTL) 1 discloses using interactive multi-objective programming to determine the optimal value of the operation amount for operating a power plant.

PTL 2 discloses performing search based on an optimization algorithm using a combination of: interactive evaluation in which output from an evaluation function is evaluated based on user interaction; and autonomous evaluation in which output from an evaluation function is evaluated based on a predetermined evaluation criterion.

[Citation List]

[Non Patent Literature]

[NPL 1] Masayuki Yamamoto and three others, "Simulation Analysis of Autonomous Ride-Sharing Service in City Area," [online], [accessed June 30, 2023], Internet <URL:https://www.denso.com/jp/ja/-/media/global/business/innov ation/review/24/24-doc-07-paper-02.pdf>

[Patent Literature]

[PTL 1] Japanese Unexamined Patent Application Publication No. 2009-030476
[PTL 2] Japanese Unexamined Patent Application Publication No. 2002-251597

[Summary of Invention]

[Technical Problem]

Unfortunately, none of NPL 1, PTL 1, or PTL 2 evaluates safety in simulations, preventing a preliminary examination that takes safety into account.

In view of the above, the present disclosure provides an information processing method and the like capable of performing a preliminary examination of a mobility service by taking safety into account.

[Solution to Problem]

An information processing method according to the present disclosure is to be executed by a computer, and includes: executing, based on an operation parameter of a moving body that accommodates a person or a delivery item, a simulation for a movement of the moving body and a transport demand for the person or the delivery item; outputting a first evaluation result of evaluating the execution result of the simulation using at least a safety index for an operation of the moving body; obtaining request information indicating a request about the operation of the moving body, where the request is made with respect to the first evaluation result; executing the simulation in accordance with the request information obtained; and outputting a second evaluation result of evaluating the execution result of the simulation using at least the safety index for the operation of the moving body.

It should be noted that these general or specific aspects of the present disclosure may be implemented as a system, a method, an integrated circuit, a computer program, a computer-readable recording medium such as a CD-ROM, or any combination of systems, methods, integrated circuits, computer programs, and media.

[Advantageous Effects of Invention]

The information processing method and the like according to an aspect of the present disclosure enable performing a preliminary examination of a mobility service by taking safety into account.

[Brief Description of Drawings]

[FIG. 1]

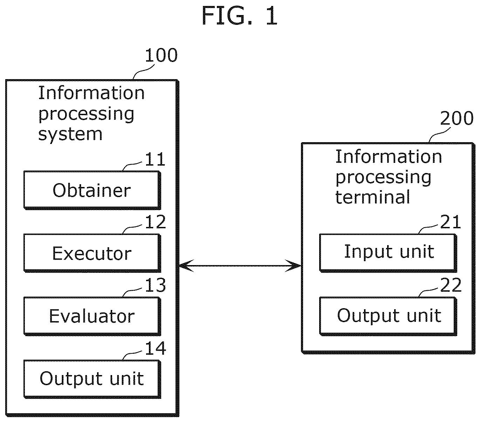

FIG. 1 is a block diagram illustrating one example of an information processing system according to an embodiment.
[FIG. 2]

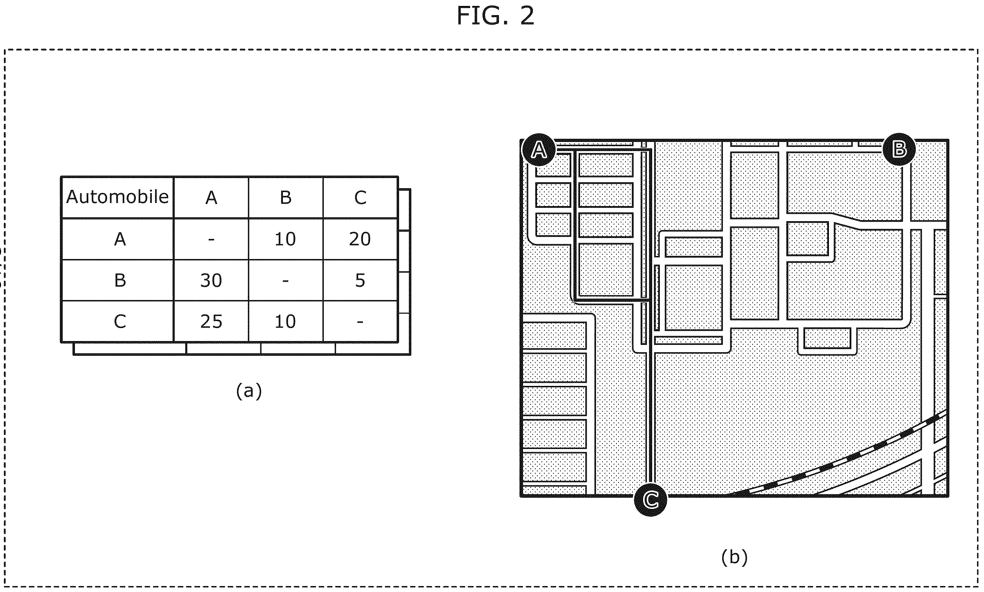

FIG. 2 is a diagram illustrating one example of initial settings regarding traffic volumes.
[FIG. 3]

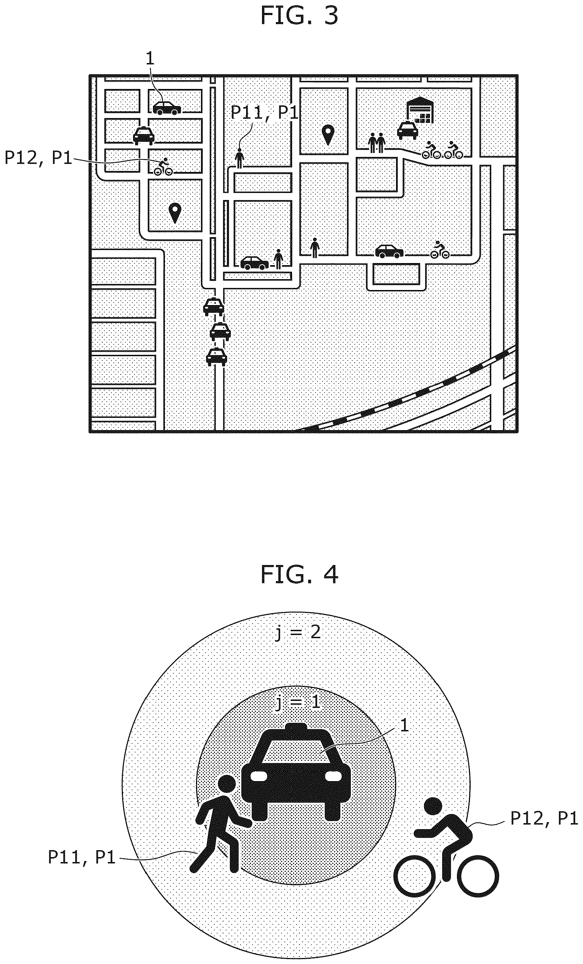

FIG. 3 is a diagram schematically illustrating a simulation executed by the information processing system according to the embodiment.
[FIG. 4]
FIG. 4 is a diagram schematically illustrating the degrees of proximity of a moving body to traffic participants.

[FIG. 5]

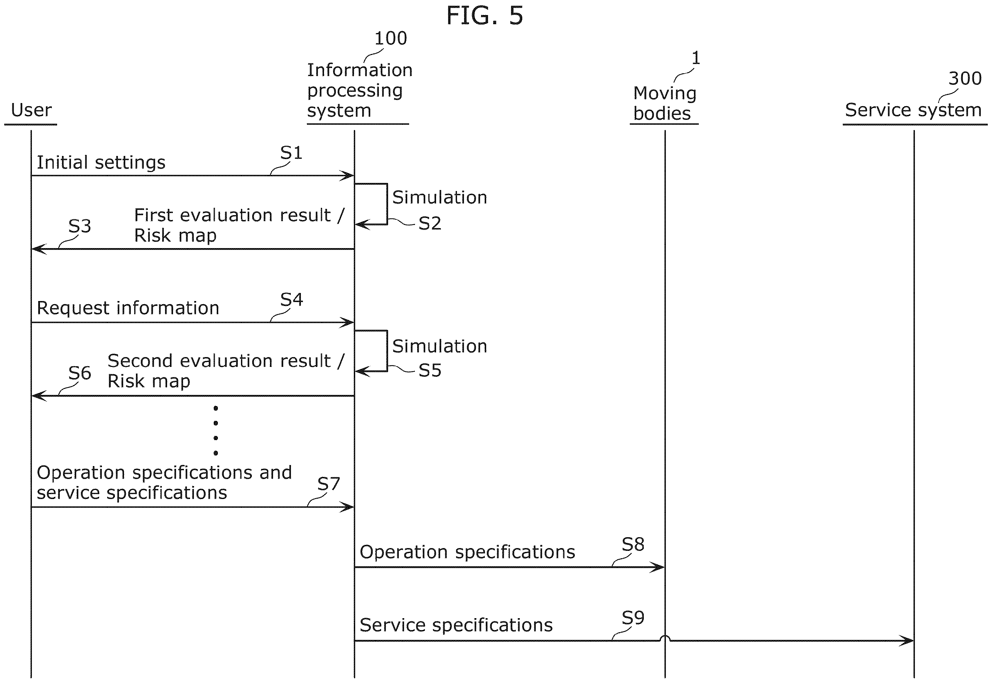

FIG. 5 is a sequence diagram illustrating an exemplary use of the information processing system according to the embodiment.

[FIG. 6]

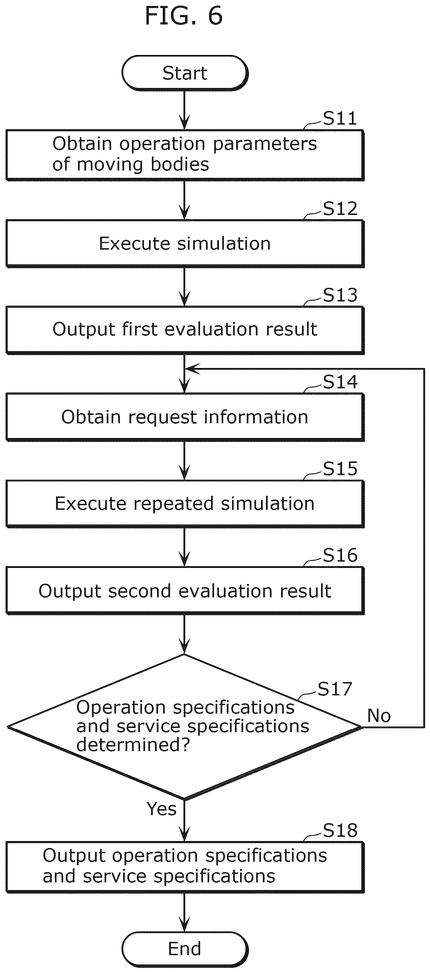

FIG. 6 is a flowchart illustrating exemplary operations of the information processing system according to the embodiment.

[FIG. 7]

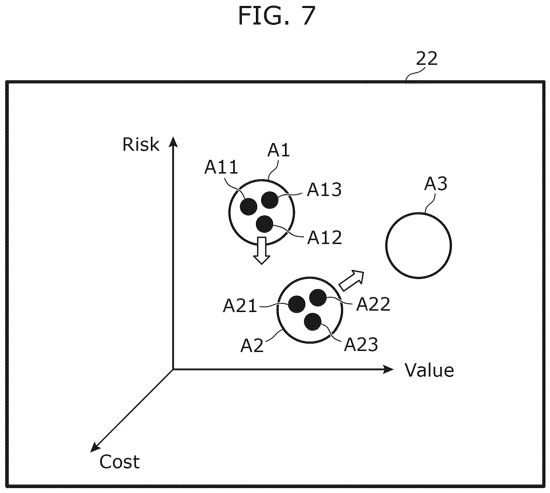

FIG. 7 is a diagram illustrating a first example of an output screen on an information processing terminal according to the embodiment.

[FIG. 8]

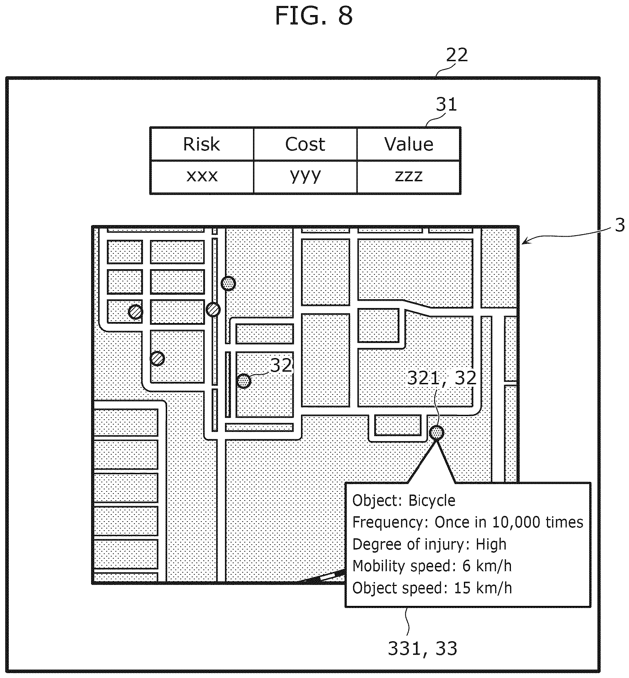

FIG. 8 is a diagram illustrating a second example of the output screen on the information processing terminal according to the embodiment.

[FIG. 9]

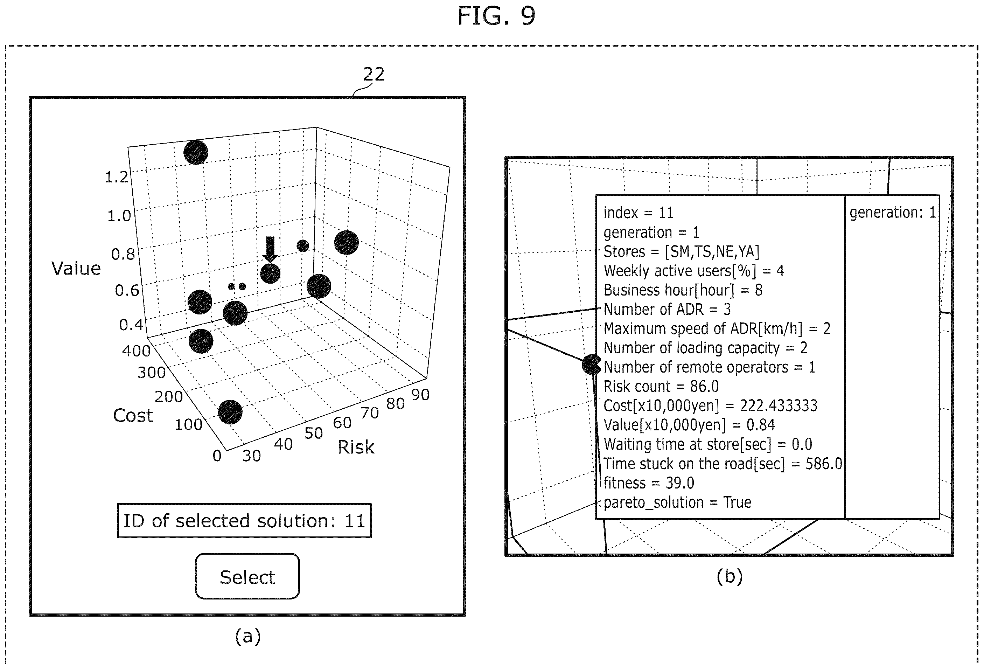

FIG. 9 is a diagram illustrating a first example of an input screen for inputting request information on the information processing terminal according to the embodiment.

[FIG. 10]

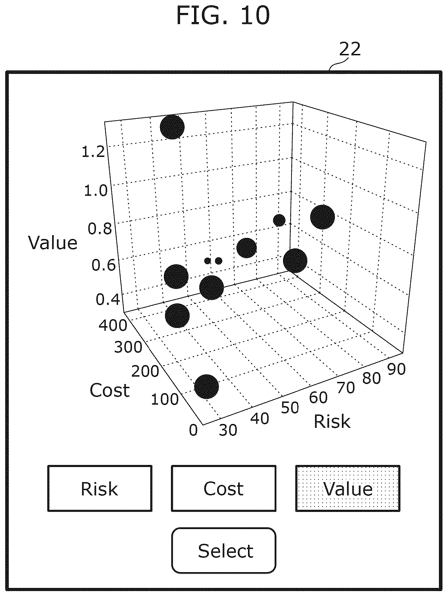

FIG. 10 is a diagram illustrating a second example of the input screen for inputting request information on the information processing terminal according to the embodiment.

[FIG. 11]

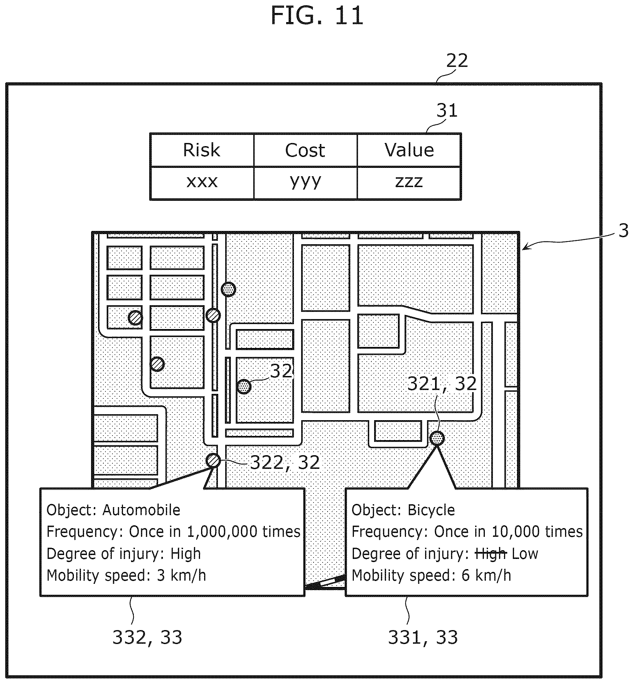

FIG. 11 is a diagram illustrating a third example of the input screen for inputting request information on the information processing terminal according to the embodiment.

[FIG. 12]

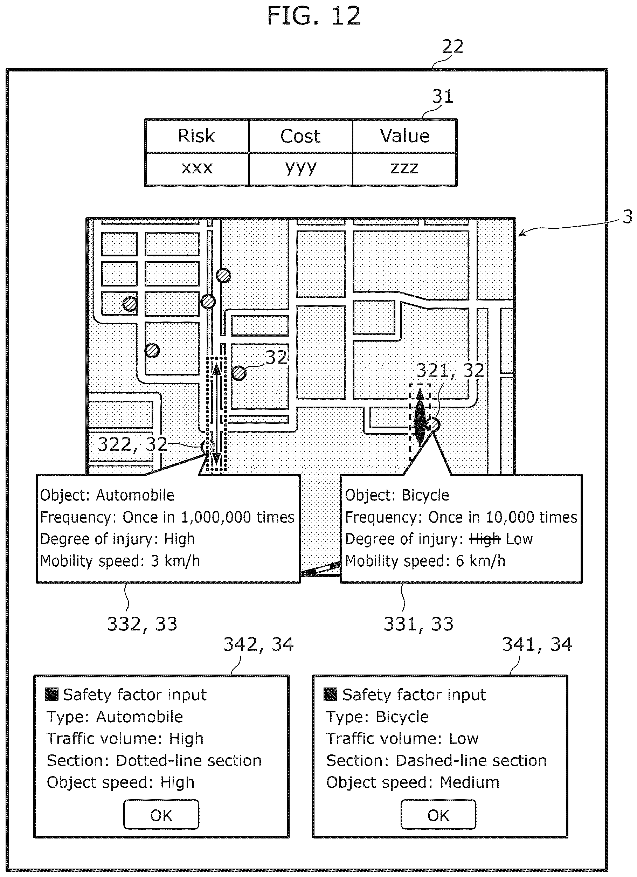

FIG. 12 is a diagram illustrating a fourth example of the input screen for inputting request information on the information processing terminal according to the embodiment.

[FIG. 13]

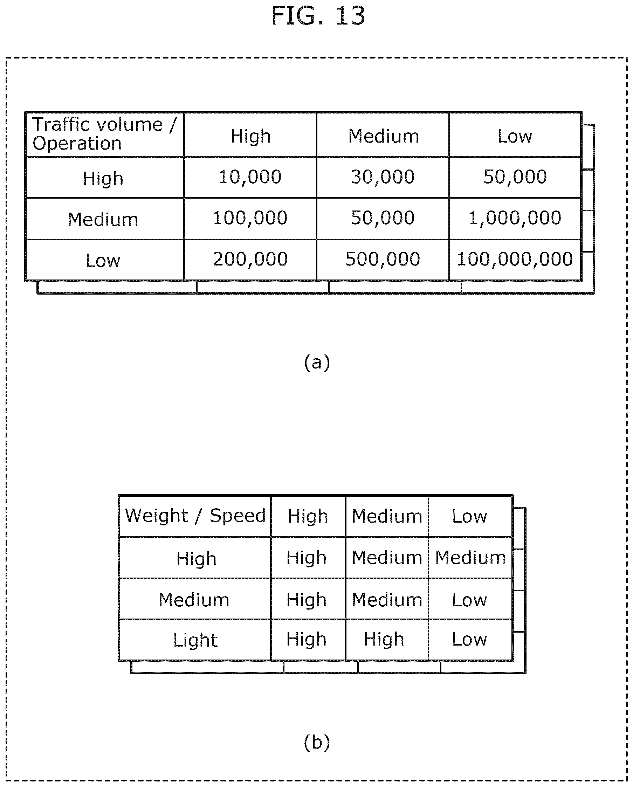

FIG. 13 is a diagram illustrating examples of generating factor information.

[FIG. 14]

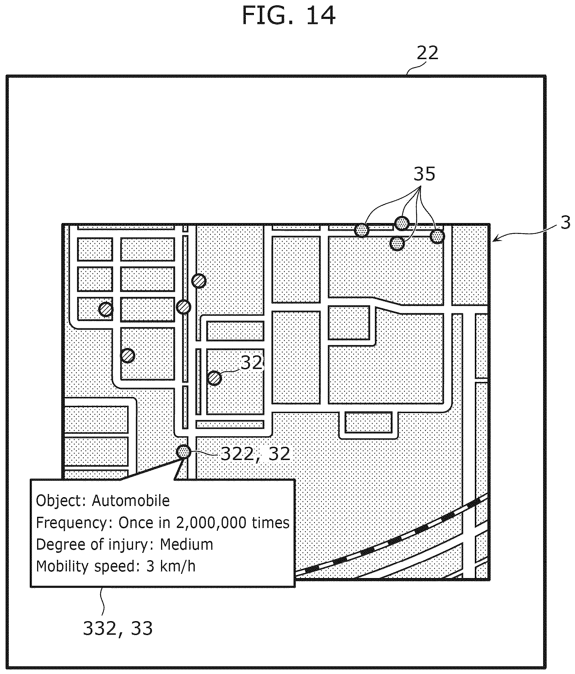

FIG. 14 is a diagram illustrating an example of the output screen on the information processing terminal after the execution of a repeated simulation based on factor information according to the embodiment.

[FIG. 15]

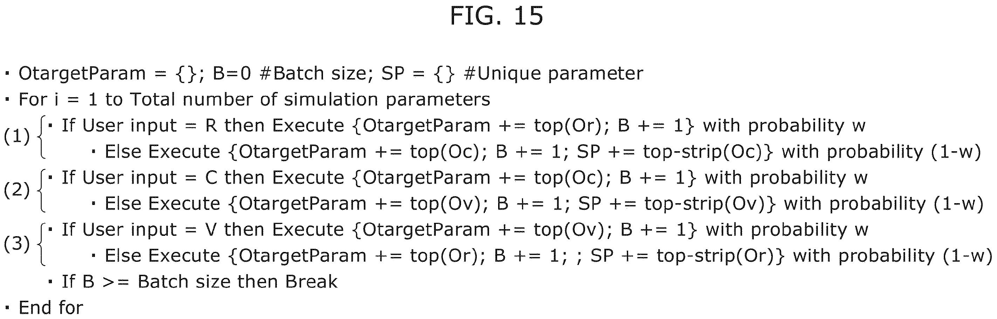

FIG. 15 is a diagram for describing a simulation that refers to a unique parameter.

[FIG. 16]

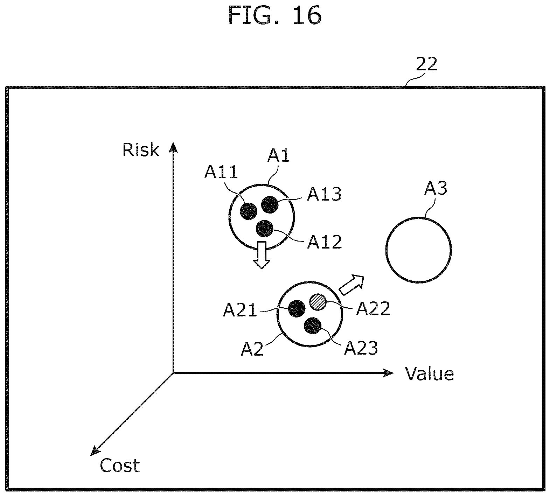

FIG. 16 is a diagram illustrating a third example of the output screen on the information processing terminal according to the embodiment.

[FIG. 17]

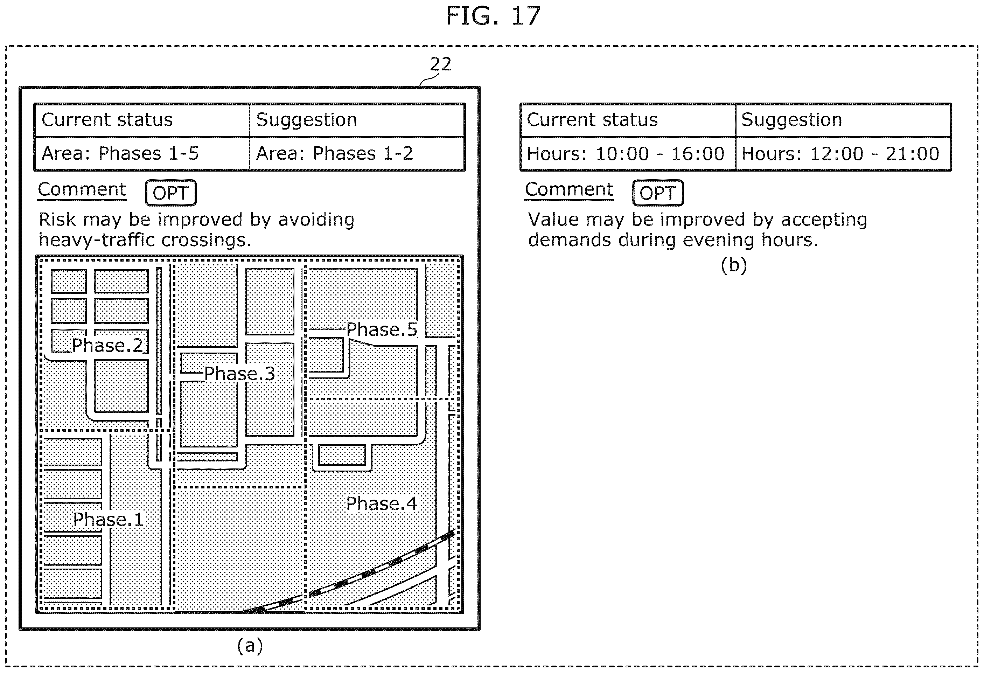

FIG. 17 is a diagram illustrating a fourth example of the output screen on the information processing terminal according to the embodiment.

[FIG. 18]

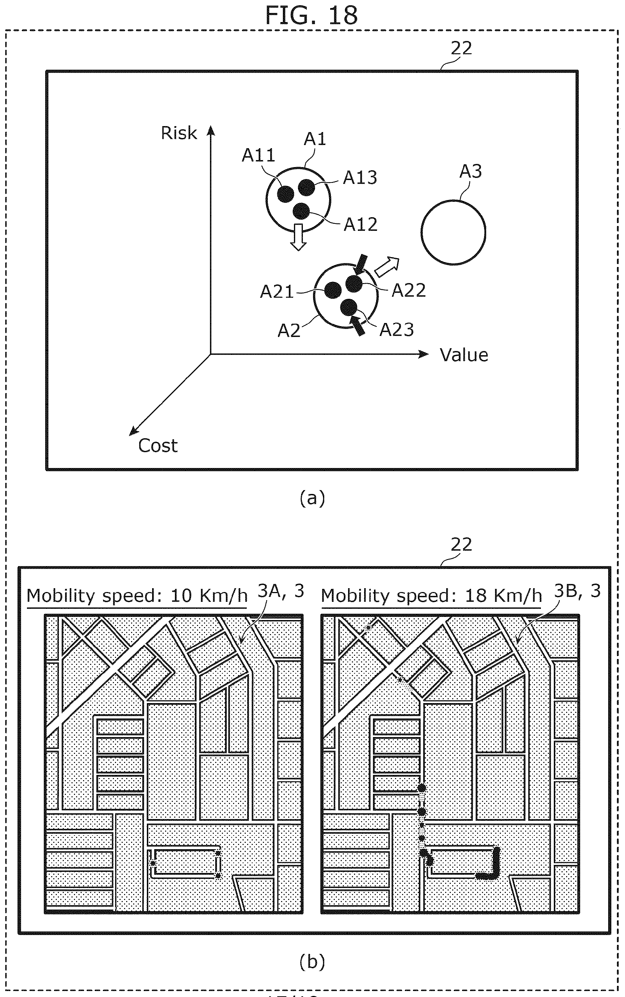

FIG. 18 is a diagram illustrating a fifth example of the output screen on the information processing terminal according to the embodiment.

[FIG. 19]

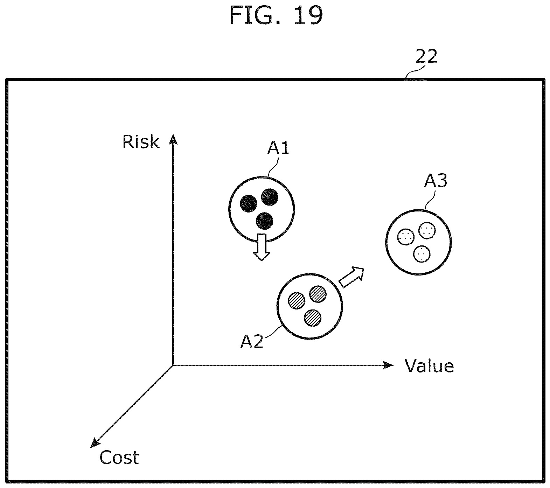

FIG. 19 is a diagram illustrating a sixth example of the output screen on the information processing terminal according to the embodiment.

[FIG. 20]

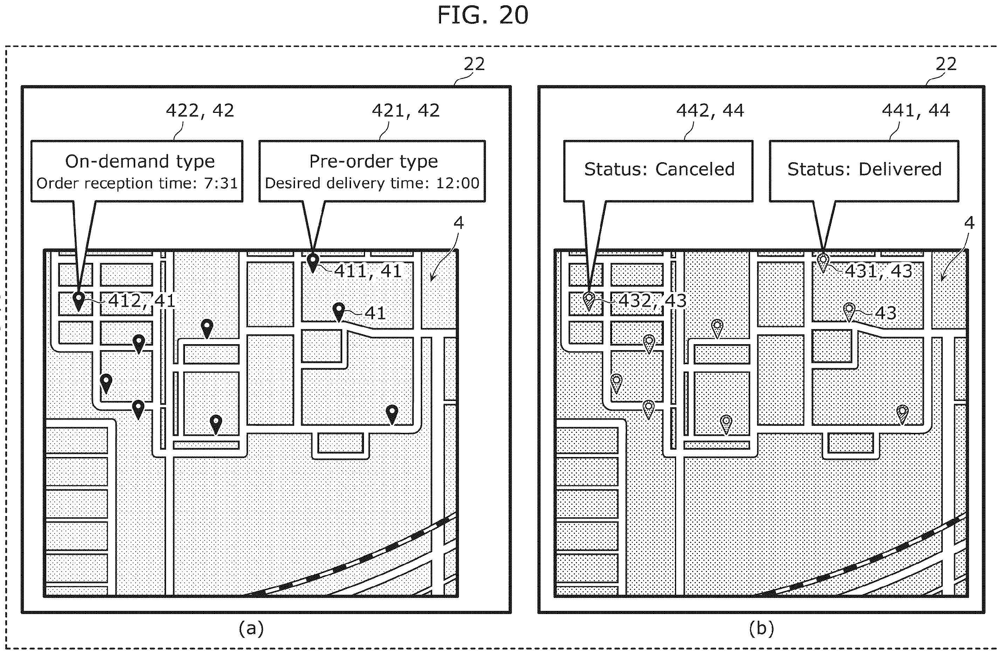

FIG. 20 is a diagram illustrating a seventh example of the output screen on the information processing terminal according to the embodiment.

[Description of Embodiments]

An information processing method according to a first aspect of the present disclosure is to be executed by a computer, and includes: executing, based on an operation parameter of a moving body that accommodates a person or a delivery item, a simulation for a movement of the moving body and a transport demand for the person or the delivery item; outputting a first evaluation result of evaluating the execution result of the simulation using at least a safety index for an operation of the moving body; obtaining request information indicating a request about the operation of the moving body, where the request is made with respect to the first evaluation result; executing the simulation in accordance with the request information obtained; and outputting a second evaluation result of evaluating the execution result of the simulation using at least the safety index for the operation of the moving body.

Thus, a user can check the first evaluation result to perform a preliminary examination of a mobility service by taking safety into account. Because the simulation is repeatedly executed through user interaction, the user can check the second evaluation result to further perform a preliminary examination of the mobility service by taking safety into account.

For example, the information processing method according to a second aspect of the present disclosure, in the first aspect, further includes outputting a risk map indicating an occurrence pattern of a safety risk in the operation of the moving body.

Thus, the user can look at the risk map to visually recognize the details of evaluation in terms of safety in the operation of the moving body.

For example, in the information processing method according to a third aspect of the present disclosure, in the second aspect, in obtaining the request information, information indicating the occurrence pattern of the safety risk that has been added to or modified in the risk map is obtained as the request information.

Thus, looking at the risk map, the user can specify a parameter to be added or modified among operation parameters of the moving body. This facilitates executing a repeated simulation that accurately reflects the user's request.

For example, the information processing method according to a fourth aspect of the present disclosure, in the third aspect, further includes outputting factor information indicating a factor that affects safety in the operation of the moving body, based on the occurrence pattern of the safety risk that has been added to or modified in the risk map. In obtaining the request information, the factor information that has been selected or modified is obtained as the request information.

Thus, a repeated simulation can be executed in accordance with the factor information reflecting the user's intention. This facilitates executing a repeated simulation that reflects the user's request without the need for the user to add or modify all the risk overviews contemplated by the user.

For example, in the information processing method according to a fifth aspect of the present disclosure, in any one of the first to fourth aspects, in outputting the first evaluation result, a plurality of first evaluation results are outputted, where each of the plurality of first evaluation results is the first evaluation result. In obtaining the request information, information indicating any one first evaluation result selected from the plurality of first evaluation results is obtained as the request information.

This facilitates executing a repeated simulation that reflects the user's request without the need for the user to specify a parameter to be added or modified among operation parameters of the moving body.

For example, in the information processing method according to a sixth aspect of the present disclosure, in any one of the first to fifth aspects, in each of outputting the first evaluation result and outputting the second evaluation result, the execution result of the simulation is further evaluated using an economic rationality index and a convenience index for the operation of the moving body.

Thus, the user can check the first evaluation result and the second evaluation result to perform preliminary examinations of the mobility service by taking into account economic rationality and convenience, in addition to safety.

For example, in the information processing method according to a seventh aspect of the present disclosure, in the sixth aspect, in obtaining the request information, improvement information indicating any one improvement selected from improvement in safety, improvement in economic rationality, and improvement in convenience in the operation of the moving body is obtained as the request information.

This facilitates executing a repeated simulation that reflects the user's request without the need for the user to specify a parameter to be added or modified among operation parameters of the moving body.

For example, in the information processing method according to an eighth aspect of the present disclosure, in the seventh aspect, in executing the simulation in accordance with the request information, the simulation is executed in accordance with a unique parameter different from the improvement information at a predetermined probability.

Thus, while simulations that reflect the user's intention are executed, a simulation irrelevant to the user's intention is also executed with a predetermined probability. The output evaluation result of such a simulation facilitates the user noticing a mobility service situation unexpected by the user.

For example, in the information processing method according to a ninth aspect of the present disclosure, in the eighth aspect, when the simulation is executed in accordance with the unique parameter, in outputting the second evaluation result, the second evaluation result of evaluating the execution result of the simulation is output in a visual mode different from a mode for outputting other second evaluation result.

Thus, the user can readily notice that a simulation unexpected by the user has been executed. This facilitates the user's determination of whether to select, as the request information, a mobility service situation unexpected by the user.

For example, the information processing method according to a tenth aspect of the present disclosure, in any one of the first to ninth aspects, further includes outputting recommendation information that recommends modification of the operation parameter of the moving body based on the first evaluation result and the second evaluation result.

Thus, the user can determine, based on the recommendation information, whether to modify the operation parameter of the moving body. This facilitates executing a repeated simulation that accurately reflects the user's request.

For example, in the information processing method according to an eleventh aspect of the present disclosure, in any one of the first to tenth aspects, in outputting the second evaluation result, the second evaluation result is output in a visual mode different from a mode for outputting the first evaluation result.

Thus, the user can visually recognize how the evaluation result changes with each simulation execution. In particular, if the evaluation results of simulations are close to each other, the user can still visually distinguish between the evaluation results.

For example, a program according to a twelfth aspect of the present disclosure causes a computer to execute the information processing method according to any one of the first to eleventh aspects.

Thus, a user can check the first evaluation result to perform a preliminary examination of a mobility service by taking safety into account. Because the simulation is repeatedly executed through user interaction, the user can check the second evaluation result to further perform a preliminary examination of the mobility service by taking safety into account.

An information processing terminal according to a thirteenth aspect of the present disclosure includes an input unit and an output unit. The input unit receives an input of an operation parameter of the moving body. The output unit outputs the first evaluation result obtained using the information processing method according to any one of the first to eleventh aspects, where the first evaluation result is obtained based on the operation parameter of the moving body received by the input unit. The input unit further receives an input of the request information. The output unit outputs the second evaluation result obtained using the information processing method, where the second evaluation result is obtained based on the request information received by the input unit.

Thus, a user can check the first evaluation result to perform a preliminary examination of a mobility service by taking safety into account. Because the simulation is repeatedly executed through user interaction, the user can check the second evaluation result to further perform a preliminary examination of the mobility service by taking safety into account.

Now, an embodiment will be described in detail with reference to the drawings.

The embodiment described below is a general or specific example of the present disclosure. The numerical values, shapes, materials, elements, arrangement and connection of the elements, steps, orders of steps, etc., described in the following embodiment are merely examples, and do not intend to limit the present disclosure.

[Embodiment]

An information processing system and an information processing method according to the embodiment will be described below.

[1. Configuration]

FIG. 1 is a block diagram illustrating one example of information processing system 100 according to the embodiment. Information processing system 100 is a system for executing simulations of a service that uses moving bodies 1 (see FIG. 3) accommodating people or delivery items, that is, a mobility service. The simulations simulate the movements of moving bodies 1, and demands for transporting people or delivery items. The simulations may also simulate collision avoidance (collision determination) between moving bodies 1 and objects. Examples of the mobility service include a service of delivering items to requesters, such as a package delivery service or a food delivery service. Examples of the mobility service also include a service of transporting people to destinations.

Moving bodies 1 are vehicles, for example automobiles or motorcycles, or may be moving bodies other than such vehicles, for example autonomous mobile robots, aircraft, or watercraft. Moving bodies 1 may be of manual driving type, semi self-driving type, or full self-driving type.

Information processing system 100 is an example of a computer that performs the information processing method. The components of information processing system 100 may reside in a single housing or may be distributed. If the components of information processing system 100 are distributed, multiple computers may perform the information processing method.

Information processing system 100 is implemented by, for example, a personal computer or a server device. In the embodiment, information processing system 100 is implemented by a server device. In the embodiment, at least part of information necessary for simulations executed by information processing system 100 is obtained from information processing terminal 200 possessed by a user. The user herein refers to a user of information processing system 100, for example a designer of the mobility service.

Information processing terminal 200 is a mobile terminal, for example a smartphone or a tablet, and includes input unit 21 and output unit 22. Input unit 21 receives the user's operational input, for example operational input provided with an input device such as a mouse or keyboard, or with the user's finger. Output unit 22 is, for example, a liquid crystal display. Output unit 22 displays an input screen for inputting items such as operation parameters of moving bodies 1 and request information (to be described below), and an output screen for presenting items such as first evaluation results and second evaluation results (to be described below). In the embodiment, output unit 22 includes a touch panel display and therefore serves as input unit 21 as well.

It is to be noted that information processing system 100 may be included in information processing terminal 200 as functions of information processing terminal 200. Conversely, information processing terminal 200 may be included in information processing system 100 as functions of information processing system 100. That is, information processing system 100 and information processing terminal 200 may be integrated into a single device.

As illustrated in FIG. 1, information processing system 100 includes obtainer 11, executor 12, evaluator 13, and output unit 14. Information processing system 100 is a computer that includes components such as a processor, a communication interface, and a memory. The memory, which may be read only memory (ROM) and random access memory (RAM), can store programs that are executed by the processor. Obtainer 11, executor 12, evaluator 13, and output unit 14 may be implemented by the processor executing programs stored in the memory, and the communication interface.

Obtainer 11 obtains operation parameters of moving bodies 1, which are various parameters used for simulations in executor 12. In the embodiment, obtainer 11 obtains, as the operation parameters of moving bodies 1, information that is input by the user making initial settings using input unit 21 of information processing terminal 200. For the initial settings, the user sets the environment in which the mobility service is conducted, demands occurring in the set environment, and elements (service factors) constituting the mobility service. More specifically, for the initial settings, the user sets a target area in which the mobility service is conducted, variables, constraints, and objective functions.

The target area is set by the user inputting, for example, map data on the target area, data indicating the traffic volumes of moving bodies 1 and traffic participants P1 (see FIG. 3) in the target area, and data indicating the amount of demand occurring in the target area. Examples of traffic participants P1 include pedestrians P11 (see FIG. 3), and vehicles such as bicycles P12 (see FIG. 3) and automobiles. The amount of demand is the numbers of requests to transport people or deliver items from users of the mobility service. The amount of demand is set by, for example, the user inputting existing track-record data in the target area.

FIG. 2 is a diagram illustrating one example of the initial settings regarding the traffic volumes. In FIG. 2, (a) illustrates an origin-destination table (OD table) for automobiles acting as moving bodies 1, and (b) illustrates a map of the target area. The numerical values in (a) in FIG. 2 indicate the numbers of automobiles per unit time (e.g., per day) that travel routes from origins to destinations. For example, 10 automobiles travel the route from origin A to destination B per unit time. In contrast, 30 automobiles travel the route from origin B to destination A per unit time. The user sets the traffic volumes in the target area by, for example, inputting an OD table for each type of moving bodies 1.

The variables are set by, for example, the user inputting data indicating the types of moving bodies 1, the travel routes of moving bodies 1, the operation hours of moving bodies 1, the passenger capacities of moving bodies 1, the speeds of moving bodies 1, the numbers of moving bodies 1, the performance of sensors provided in moving bodies 1, the performance of brakes provided in moving bodies 1, the acceleration performance of moving bodies 1, the degree of implementation of dual redundancy in the system, remote monitoring of moving bodies 1, and remote control of moving bodies 1.

The constraints are set by, for example, the user inputting data indicating zones in the target area where moving bodies 1 are permitted (or prohibited from) entering, as well as zones in the target area where the travel speed of moving bodies 1 is restricted, and speed limits for moving bodies 1 in these zones.

The objective functions are set by, for example, the user inputting data indicating minimization of the initial cost necessary for introducing the mobility service, minimization of the operation cost necessary for operating the mobility service, and maximization of the number of cases of transport or delivery.

It is to be noted that the user may make all of the above initial settings or only some of the above initial settings. In the latter case, parameters of the initial settings not set by the user may take, for example, default values stored in advance in information processing system 100.

Obtainer 11 also obtains, after output unit 14 outputs a first evaluation result as will be described below, request information that indicates a request about the operation of moving bodies 1 made with respect to the first evaluation result. The request information indicates the user's request for addition, modification, or improvement with respect to the first evaluation result.

Executor 12 executes, based on the operation parameters of moving bodies 1 obtained by obtainer 11, a simulation of the movements of moving bodies 1 and demands for transporting people or delivery items. FIG. 3 is a diagram schematically illustrating a simulation executed by information processing system 100 according to the embodiment. The map illustrated in FIG. 3 represents the target area set in the initial settings. The map illustrated in FIG. 3 shows the icon(s) of one or more moving bodies 1 and the icon(s) of one or more traffic participants P1 (here, pedestrians P11 and bicycles P12) set in the initial settings.

Based on the traffic volumes in the target area, the amount of demand, variables, constraints, and objective functions set in the initial settings, executor 12 simulates the movements of one or more moving bodies 1 and one or more traffic participants P1. If a single objective function is used, executor 12 executes a single simulation so as to calculate the optimal solution of the objective function, thereby obtaining the execution result of the single simulation. If multiple objective functions are used, executor 12 executes multiple simulations so as to calculate Pareto solutions, thereby obtaining the execution results of the multiple simulations.

Executor 12 also executes, in response to request information obtained by obtainer 11 as will be described below, a repeated simulation in accordance with the obtained request information. In the repeated simulation, executor 12 executes the simulation based on both the operation parameters of moving body 1 and the request information.

Evaluator 13 evaluates the results of simulations (including repeated simulations) executed by executor 12. In the embodiment, evaluator 13 evaluates the execution result of each simulation using three indexes for the operation of moving bodies 1: a safety (Risk) index, an economic rationality (Cost) index, and a convenience (Value) index.

The safety index is a comprehensive indicator of, for example, risks such as the close proximity of moving bodies 1 and traffic participants P1 during the operation of the mobility service. The economic rationality index is a comprehensive indicator of, for example, the prices and fuel costs of moving bodies 1 and the costs of operating the mobility service. The convenience index is a comprehensive indicator of, for example, the number of cases of transporting people or delivering items that can be provided by the mobility service per day.

The following describes examples of calculating the evaluations of the safety index, the economic rationality index, and the convenience index. It is to be noted that the evaluations of the safety index, the economic rationality index, and the convenience index may be calculated in manners other than the exemplary manners recited below.

The evaluation of the safety index is calculated by, for example, calculating the degree of collision risk for each moving body 1 based on the degree of proximity to traffic participants P1 in terms of distance, and summing the calculated degrees of collision risk for all moving bodies 1.

Specifically, the evaluation of the safety index is calculated with, for example, Expression (1) below. In Expression (1), "i" indicates moving body 1, "j" indicates a predetermined range with reference to the position of moving body 1, "$w_j$" indicates a weighting factor for the degree of risk depending on the size of the predetermined range, and "$n_{ij}$" indicates the number of times moving body 1 and traffic participants P1 come in close proximity within the predetermined range. The weighting factor for the degree of risk is, in other words, the degree of injury.
[Math. 1]

$$\sum_i \sum_j w_j \times n_{ij} \quad (1)$$

FIG. 4 is a diagram schematically illustrating the degrees of proximity of moving body 1 to traffic participants P1. Moving body 1 shown in FIG. 4 is i = 1. In the example illustrated in FIG. 4, for j = 1, pedestrian P11 is in the predetermined range. Therefore, one is added to $n_{11}$. For j =2, bicycle P12 is in the predetermined range. Therefore, one is added to $n_{12}$.

The degree of collision risk may also be calculated by, for example, further multiplying the degree by a weighting factor depending on the type of traffic participant P1 (automobile, motorcycle, bicycle, or pedestrian). The degree of collision risk may also be calculated by, for example, further multiplying the degree by a weighting factor depending on the speed of traffic participant P1.

The evaluation of the economic rationality index is calculated with, for example, Expression (2) below. In Expression (2), "i" indicates moving body 1, "j" indicates personnel engaged in the operation of moving body 1, "$CV_i$" indicates the cost of preparing moving body 1 for the operation of the mobility service, "$CF_i$" indicates a fuel cost depending on the mileage of moving body 1 during the operation of the mobility service, and "$CH_j$" indicates the labor cost of the personnel engaged in the operation of moving body 1.
[Math. 2]

$$\sum_i CV_i + \sum_i CF_i + \sum_j CH_j \quad (2)$$

The evaluation of the convenience index is calculated by, for example, either one of Expressions (3) and (4) below if the mobility service is a service of delivering items to requesters, such as a package delivery service. In Expression (3), "i" indicates moving body 1, and "$VT_i$" indicates the number of cases of item delivery during a predetermined period. In Expression (4), "j" indicates delivery of an item, "$RT_j$" indicates the actual time of the completion of the delivery, and "$PT_j$" indicates the scheduled time of the completion of the delivery. That is, Expression (4) indicates the total sum of the delay times of all the cases of item delivery.

[Math. 3]

$$\sum_i VT_i \quad (3)$$
$$\sum_j RT_j - PT_j \quad (4)$$

If the mobility service is a route sales service of items, the evaluation of the convenience index is calculated with, for example, Expression (5) below. In Expression (5), "k" indicates selling of an item, and "$S_k$" indicates sales. That is, Expression (5) indicates the total sales of items during the operation hours.
[Math. 4]

$$\sum_k S_k \quad (5)$$

The result of evaluation in evaluator 13 of the result of a simulation executed by executor 12 based on the operation parameters of moving bodies 1 is hereinafter referred to as a "first evaluation result." The result of evaluation in evaluator 13 of the result of a repeated simulation executed by executor 12 based on the operation parameters of moving bodies 1 and on the request information is hereinafter referred to as a "second evaluation result." That is, the "first evaluation result" is the result of evaluating the result of the initial simulation executed by information processing system 100, whereas the "second evaluation result" is the result of evaluating the result of the second or further simulation executed by information processing system 100.

Output unit 14 outputs the result of evaluation made by evaluator 13 (the first evaluation result or the second evaluation result). The first evaluation result and the second evaluation result both include at least the result of evaluation using the safety index for the operation of moving bodies 1. In the embodiment, evaluator 13 evaluates the results of simulations executed by executor 12 using, in addition to the safety index for the operation of moving bodies 1, the economic rationality index and convenience index for the operation of moving bodies 1. Thus, in the embodiment, the first evaluation result and the second evaluation result both include the result of evaluation using the safety index, economic rationality index, and convenience index for the operation of moving bodies 1.

Output unit 14 outputs the first evaluation result

(or the second evaluation result) by, for example, causing output unit 22 of information processing terminal 200 to display an output screen indicating the first evaluation result (or the second evaluation result). Specific examples of the output screen will be described below.

[2. Operations]

Now, operations of information processing system 100 according to the embodiment will be described. First, with reference to FIG. 5, the following describes the flow of information in designing and preliminarily examining a mobility service using information processing system 100 according to the embodiment. FIG. 5 is a sequence diagram illustrating an exemplary use of information processing system 100 according to the embodiment.

As illustrated in FIG. 5, first, a user such as a designer of the service makes initial settings (S1). Specifically, the user makes the initial settings by, for example, inputting operation parameters of moving bodies 1 for use in simulations, looking at an input screen displayed on output unit 22 of information processing terminal 200.

Information processing system 100 executes a simulation (S2). Specifically, information processing system 100 obtains the information input by the user in making the initial settings, that is, the operation parameters of moving bodies 1, and executes the simulation based on the obtained operation parameters of moving bodies 1.

Information processing system 100 outputs a first evaluation result (S3). Specifically, information processing system 100 evaluates the execution result of the simulation using at least the safety index for the operation of moving bodies 1, and outputs the result of the evaluation as the first evaluation result. Here, information processing system 100 outputs the first evaluation result by causing output unit 22 of information processing terminal 200 to display an output screen indicating the first evaluation result. It is to be noted that, at step S3, information processing system 100 may further output risk map 3 (see FIG. 8) at the user's request. Risk map 3 will be described below.

The user inputs request information (S4). Specifically, for example, the user inputs the request information, looking at the output screen indicating the first evaluation result displayed on output unit 22 of information processing terminal 200. Examples of inputting the request information will be described below.

Information processing system 100 executes a repeated simulation (S5). Specifically, information processing system 100 obtains the request information input by the user, and executes a repeated simulation in accordance with the obtained request information and the operation parameters of moving bodies 1.

Information processing system 100 outputs a second evaluation result (S6). Specifically, information processing system 100 evaluates the execution result of the repeated simulation using at least the safety index for the operation of moving bodies 1, and outputs the result of the evaluation as the second evaluation result. Here, information processing system 100 outputs the second evaluation result by causing output unit 22 of information processing terminal 200 to display an output screen indicating the second evaluation result. It is to be noted that, at step S6, as at step S3, information processing system 100 may further output risk map 3 at the user's request.

Steps S4 to S6 are repeated until a second evaluation result satisfactory to the user is obtained. That is, steps S4 to S6 may each be performed once or multiple times. Once the user obtains a satisfactory second evaluation result, that is, once operation specifications for moving bodies 1 and service specifications are determined, the user uses information processing terminal 200 to provide input indicating that the operation specifications and the service specifications have been determined (S7). The operation specifications may include the type of moving bodies 1, the speed of moving bodies 1, and the travel route of moving bodies 1. The service specifications may include the target area of the mobility service, and the charge for using the mobility service.

Lastly, information processing system 100 transmits data indicating the operation specifications to moving bodies 1 (S8). Moving bodies 1 receive the data and sets their parameters in accordance with the operation specifications indicated by the data. Information processing system 100 further transmits data indicating the service specifications to service system 300 (S9). Service system 300 is a system providing the mobility service. Service system 300 receives the data and provides the mobility service in accordance with the service specifications indicated by the data.

Information processing system 100 may also transmit the data indicating the operation specifications to service system 300. In this case, the entity operating service system 300 may set the parameters of moving bodies 1 in accordance with the operation specifications indicated by the received data.

Now, the basic operations of information processing system 100 (in other words, the basic steps of the information processing method) according to the embodiment will be described with reference to FIG. 6. FIG. 6 is a flowchart illustrating exemplary operations of information processing system 100 according to the embodiment.

As illustrated in FIG. 6, first, obtainer 11 of information processing system 100 obtains operation parameters of moving bodies 1 input by, for example, the user in making initial settings on information processing terminal 200 (S11). Executor 12 executes a simulation based on the operation parameters of moving bodies 1 obtained by obtainer 11 (S12). Evaluator 13 evaluates the result of the simulation executed by executor 12. Output unit 14 outputs the result of the evaluation made by evaluator 13, that is, a first evaluation result (S13).

Obtainer 11 obtains request information input by, for example, the user on information processing terminal 200 (S14). Executor 12 executes a repeated simulation in accordance with the request information obtained by obtainer 11 and the operation parameters of moving bodies 1 (S15). Evaluator 13 evaluates the result of the repeated simulation executed by executor 12. Output unit 14 outputs the result of the evaluation made by evaluator 13, that is, a second evaluation result (S16).

Information processing system 100 repeats steps S14 to S16 (S17: No) until the user determines operation specifications and service specifications. Once the user determines the operation specifications and the service specifications (S17: Yes), information processing system 100 outputs the operation specifications and the service specifications (S18).

[3. Screen Examples]

Now, exemplary screens displayed on output unit 22 of information processing terminal 200 will be individually described. FIG. 7 is a diagram illustrating a first example of the output screen on information processing terminal 200 according to the embodiment. In the first example, as illustrated in FIG. 7, the screen displayed on output unit 22 of information processing terminal 200 shows a three-dimensional graph having axes corresponding to evaluations in terms of safety (Risk), economic rationality (Cost), and convenience (Value) in the operation of moving bodies 1.

FIG. 7 shows first evaluation results and second evaluation results. Specifically, area A1 shows points A11 to A13 indicating first evaluation results. Area A2 shows points A21 to A23 indicating second evaluation results of the first repeated simulation executed by information processing system 100. Area A3 shows second evaluation results (not shown) of the second repeated simulation executed by information processing system 100. The user can look at the output screen displayed on output unit 22 to visually recognize how the second evaluation results change with each input of request information.

In response to the user selecting any evaluation result by, for example, placing a pointer on the relevant point, information processing system 100 causes output unit 22 to display risk map 3 corresponding to the selected evaluation result, as illustrated in FIG. 8. Risk map 3 indicates the occurrence patterns of safety risks in the operation of moving bodies 1. Risk map 3 may be displayed on output unit 22 alone or together with the three-dimensional graph illustrated in FIG. 7.

FIG. 8 is a diagram illustrating a second example of the output screen on information processing terminal 200 according to the embodiment. In the second example, as illustrated in FIG. 8, the screen displayed on output unit 22 shows risk map 3 corresponding to the evaluation result selected by the user. Risk map 3 shows a map representing the target area, score table 31 corresponding to the selected evaluation result, and one or more markers 32 indicating locations where safety risks occur.

Score table 31 includes a first score indicating evaluation in terms of safety, a second score indicating evaluation in terms of economic rationality, and a third score indicating evaluation in terms of convenience. Lower first scores indicate higher safety in the operation of moving bodies 1. Lower second scores indicate higher economic rationality in the operation of moving bodies 1. Higher third scores indicate higher convenience in the operation of moving bodies 1.

In response to the user selecting any marker 32 by, for example, placing the pointer on that marker 32, information processing system 100 causes output unit 22 to display balloon 33 indicating an overview of the risk occurring at the location of that marker 32. Balloon 33 shows, for example, the type of an object colliding with moving body 1 (hereinafter also simply referred to as the "type"), the frequency of possible collision between moving body 1 and the object (hereinafter also simply referred to as the "frequency"), the degree of injury due to the collision between moving body 1 and the object (hereinafter also simply referred to as the "degree of injury"), and the speed of moving body 1 (hereinafter also simply referred to as the "mobility speed") and the speed of the object (hereinafter also simply referred to as the "object speed") upon the occurrence of the collision between moving body 1 and the object. In the example illustrated in FIG. 8, the user selects marker 321 to cause output unit 22 to display balloon 331 indicating an overview of the risk occurring at the location of marker 321. The user can look at risk map 3 to visually recognize the details of evaluation in terms of safety in the operation of moving bodies 1.

FIG. 9 is a diagram illustrating a first example of an input screen for inputting request information on information processing terminal 200 according to the embodiment. In the first example, as illustrated in (a) in FIG. 9, the screen displayed on output unit 22 of information processing terminal 200 shows a three-dimensional graph similar to the one illustrated in FIG. 7, with a few differences in graph display mode. Illustrated in (a) in FIG. 9 are points each indicating an evaluation result (here, a first evaluation result).

In response to the user selecting any point by, for example, placing the pointer on that point (see an arrow in (a) in FIG. 9), the identifier of the selected evaluation result appears below the three-dimensional graph. It is to be noted that, in response to the user selecting any point, information processing system 100 may also cause output unit 22 to display detailed information on the selected evaluation result, as illustrated in (b) in FIG. 9. Then, in response to the user selecting a "Select" icon, information processing system 100 obtains the user-selected evaluation result as request information. That is, in this example, obtainer 11 obtains, as the request information, information indicating any one first evaluation result selected by the user from multiple first evaluation results. This facilitates executing a repeated simulation that reflects the user's request without the need for the user to specify a parameter to be added or modified among the operation parameters of moving bodies 1.

FIG. 10 is a diagram illustrating a second example of the input screen for inputting request information on information processing terminal 200 according to the embodiment. In the second example, as illustrated in FIG. 10, the screen displayed on output unit 22 of information processing terminal 200 shows a three-dimensional graph similar to the one illustrated in (a) in FIG. 9. FIG. 10 also shows the three icons "Risk," "Cost," and "Value."

In response to the user selecting any of the icons by, for example, placing the pointer on that icon, and then selecting a "Select" icon, information processing system 100 obtains the index indicated by the user-selected icon as request information indicating the user's request for improvement. In the example illustrated in FIG. 10, information processing system 100 obtains request information indicating the user's request to improve convenience (Value). That is, in this example, obtainer 11 obtains, as the request information, improvement information requesting the improvement of any one selected from safety, economic rationality, and convenience in the operation of moving bodies 1. This facilitates executing a repeated simulation that reflects the user's request without the need for the user to specify a parameter to be added or modified among the operation parameters of moving bodies 1.

The user may also input request information by adding an annotation to risk map 3 displayed on output unit 22 of information processing terminal 200, that is, by adding metadata to risk map 3. FIG. 11 is a diagram illustrating a third example of the input screen for inputting request information on information processing terminal 200 according to the embodiment. In the third example, as illustrated in FIG. 11, the screen displayed on output unit 22 shows risk map 3 similar to the one illustrated in FIG. 8.

In the example illustrated in FIG. 11, the user modifies the "degree of injury" from "high" to "low" in balloon 331. The modified information is obtained by obtainer 11 of information processing system 100 as request information.

In the example illustrated in FIG. 11, the user also adds new marker 322 on risk map 3 and further edits the content of balloon 332 corresponding to this marker 322. Here, the user edits the overview of the risk occurring at the location of marker 322 to specify that the "type" is automobile, the "frequency" is once in 1,000,000 times, the "degree of injury" is high, and the "mobility speed" is 3 km/h. The added information is obtained by obtainer 11 of information processing system 100 as request information.

That is, in this example, obtainer 11 obtains, as the request information, information indicating the occurrence pattern of a risk added or modified on risk map 3. Thus, looking at risk map 3, the user can specify a parameter to be added or modified among the operation parameters of moving bodies 1. This facilitates executing a repeated simulation that accurately reflects the user's request.

In response to the user making an annotation on risk map 3 as illustrated in FIG. 11 for example, information processing system 100 may further cause factor information to be displayed on risk map 3, as illustrated in FIG. 12. That is, based on the occurrence pattern of a risk added or modified, information processing system 100 may further output factor information indicating factors that affect safety in the operation of moving bodies 1.

FIG. 12 is a diagram illustrating a fourth example of the input screen for inputting request information on information processing terminal 200 according to the embodiment. In the fourth example, as illustrated in FIG. 12, the screen displayed on output unit 22 shows risk map 3 similar to the one illustrated in FIG. 11, as well as input boxes 34 indicating factor information. Input box 341, displayed at the lower right on output unit 22, appears in response to the modification made to the risk overview in balloon 331. Input box 342, displayed at the lower left on output unit 22, appears in response to the addition of new marker 322.

Input box 341 presents, based on the modification made by the user to the risk overview in balloon 331, information on factors that may arise along with the risk. Specifically, input box 341 presents factor information indicating that the "type" is bicycle, the section in which the collision may occur (hereinafter also simply referred to as the "section") is a section indicated by a dashed line on risk map 3, the traffic volume in the section (hereinafter also simply referred to as the "traffic volume") is low, and the "object speed" is medium. If the user accepts the presented factor information, the user selects an "OK" icon. If the user wants to modify the presented factor information, the user modifies it and selects the "OK" icon. The selected or modified factor information is then obtained by obtainer 11 of information processing system 100 as request information.

Input box 342 presents, based on the addition by the user to the risk overview in balloon 332, information on factors that may arise along with the risk. Specifically, input box 342 presents factor information indicating that the "type" is automobile, the "section" is a section indicated by a dotted line on risk map 3, the "traffic volume" is high, and the "object speed" is high. If the user accepts the presented factor information, the user selects an "OK" icon. If the user wants to modify the presented factor information, the user modifies it and selects the "OK" icon. The selected or modified factor information is then obtained by obtainer 11 of information processing system 100 as request information.

It is to be noted that, in input boxes 34, the user may modify the "traffic volume" either by inputting any of "high," "medium," and "low" or by inputting a numerical value. Similarly, the user may modify the "object speed" either by inputting any of "high," "medium," and "low" or by inputting a numerical value.

FIG. 13 is a diagram illustrating examples of generating the factor information. An example in (a) in FIG. 13 illustrates data indicating the correlation among the "frequency," the operation frequency of moving bodies 1, and the "traffic volume." The data illustrated in (a) in FIG. 13 may further include data indicating the correlation with other parameters, such as the range in which a collision between moving body 1 and an object may occur. An example in (b) in FIG. 13 illustrates data indicating the correlation among the "type" (here, the weight of an object), the "object speed," and the "degree of injury." The data illustrated in (b) in FIG. 13 may further include data indicating the correlation with other parameters, such as the travel route of the object.

These data items are, for example, stored in advance in memory of information processing system 100 and referred to in generating the factor information. Specifically, information processing system 100 refers to the data illustrated in (a) in FIG. 13 to calculate the "traffic volume" in the factor information from the "frequency" added to or modified in balloon 33 and from the operation frequency of moving bodies 1 included in the operation parameters of moving bodies 1. Information processing system 100 also refers to the data illustrated in (b) in FIG. 13 to calculate the "degree of injury" in the factor information from the "type" and the "object speed" added to or modified in balloon 33.

That is, in this example, obtainer 11 obtains selected or modified factor information as request information. Executor 12 then executes a repeated simulation based on the factor information (request information) obtained by obtainer 11. FIG. 14 is a diagram illustrating an example of the output screen on information processing terminal 200 after the execution of a repeated simulation based on the factor information according to the embodiment. In the example illustrated in FIG. 14, as shown in balloon 332, the overview of the risk occurring at the location of marker 322 is updated. Further, in the example illustrated in FIG. 14, new markers 35, i.e., risk occurrence locations, are added at the upper right on risk map 3.

In this example, a repeated simulation can be executed in accordance with the factor information reflecting the user's intention. This facilitates executing a repeated simulation that reflects the user's request without the need for the user to add or modify all the risk overviews contemplated by the user.

If obtainer 11 obtains improvement information as illustrated in the example in FIG. 10 as the request information, executor 12 of information processing system 100 executes a repeated simulation in accordance with the improvement information. While executing such repeated simulations, executor 12 may execute, with a predetermined probability, a simulation in accordance with a unique parameter irrelevant to the improvement information.

FIG. 15 is a diagram for describing a simulation that refers to a unique parameter. FIG. 15 illustrates part of an algorithm followed by executor 12 to execute simulations. In FIG. 15, "OtargetParam" indicates an ordered set of parameters used in simulations. In FIG. 15, "Or" indicates an ordered set of parameters that largely affect the safety index for the operation of moving bodies 1; "Oc" indicates an ordered set of parameters that largely affect the economic rationality index for the operation of moving bodies 1; and "Ov" indicates an ordered set of parameters that largely affect the convenience index for the operation of moving bodies 1.

The "top" processing in FIG. 15 indicates the processing of sequentially changing parameters in the ordered set so that the simulation result is improved and generating new simulation parameters, which are return values. For example, the "top" processing may involve changing the parameter indicated by the first element in the ordered set with a probability of 50%, changing the parameter indicated by the second element with a probability of 25%, and changing the parameter indicated by the third element with a probability of 12.5%. The "top-strip" processing indicates the processing of removing the first element in the ordered set, the corresponding parameter of which is a return value.

As illustrated in (1) in FIG. 15, if, for example, obtainer 11 obtains improvement information requesting the improvement of the safety in the operation of moving bodies 1, executor 12 generates simulation parameters to be used next in accordance with the parameter priorities indicated by the ordered set "Or" with the probability ω and executes simulations. Meanwhile, executor 12 selects the ordered set "Oc" with a predetermined probability (1 - ω), changes a parameter indicated by a unique parameter to generate simulation parameters, and executes simulations. As illustrated in (2) in FIG. 15, if, for example, obtainer 11 obtains improvement information requesting the improvement of the economic rationality in the operation of moving bodies 1, executor 12 similarly generates simulation parameters to be used next in accordance with the parameter priorities indicated by the ordered set "Oc" with the probability ω and executes simulations. Meanwhile, executor 12 selects the ordered set "Ov" with the predetermined probability (1 - ω), changes a parameter indicated by the unique parameter to generate simulation parameters, and executes simulations. As illustrated in (3) in FIG. 15, if, for example, obtainer 11 obtains improvement information requesting the improvement of the convenience in the operation of moving bodies 1, executor 12 similarly generates simulation parameters to be used next in accordance with the parameter priorities indicated by the ordered set "Ov" with the probability ω and executes simulations. Meanwhile, executor 12 selects the ordered set "Or" with the predetermined probability (1 - ω), changes a parameter indicated by the unique parameter to generate simulation parameters, and executes simulations.

That is, in this example, executor 12 executes simulations in accordance with the improvement information with the probability ω, and executes simulations in accordance with the unique parameter irrelevant to the improvement information with the predetermined probability (1 - ω). An exemplary value of the probability ω is 0.9, although the probability may be set by the user as appropriate. As the value of the predetermined probability (1 - ω) is greater, simulations irrelevant to the user's intention are more likely to be executed.

In this example, while simulations that reflect the user's intention are executed, a simulation irrelevant to the user's intention is also executed with a predetermined probability. The output evaluation result of such a simulation facilitates the user noticing a mobility service situation unexpected by the user.

The variable "SP" in FIG. 15 stores the parameter changed when the unique parameter is generated during the simulation parameter generation. The user may be informed of the parameter stored in this parameter set SP in such a manner that it is displayed in a different color in parameter display as illustrated in (b) in FIG. 9.

If a simulation is executed using a unique parameter as described above, output unit 14 may output the second evaluation result of evaluating the execution result of the simulation in a visual mode different from that for other second evaluation results. The "other second evaluation results" here are second evaluation results of evaluating the execution results of regular simulations that do not use a unique parameter.

Through the above operations, the user can notice an unexpected simulation parameter that would otherwise be missed, while repeating simulations that are improved in accordance with the user's preference. That is, this processing is effective for discovering an unexpected optimal solution, especially in cases where the distribution of Pareto solutions that improve the safety, economic rationality, and convenience indexes changes discontinuously with parameter change.

FIG. 16 is a diagram illustrating a third example of the output screen on information processing terminal 200 according to the embodiment. In the third example, the screen displayed on output unit 22 of information processing terminal 200 shows a three-dimensional graph similar to the one illustrated in FIG. 7. In the third example, however, among points A21 to A23 indicating second evaluation results, point A22 indicating a second evaluation result of evaluating the execution result of a simulation using a unique parameter is displayed in a visual mode different from the visual mode for points A21 and A23 indicating the other second evaluation results. Although point A22 is differentiated from points A21 and A23 by hatching type in the example illustrated in FIG. 16, it may be differentiated in any other manner, for example by color or shape.

In this example, the user can readily notice that a simulation unexpected by the user has been executed. This facilitates the user's determination of whether to select, as the request information, a mobility service situation unexpected by the user.

Output unit 14 of information processing system 100 may further output, based on first evaluation results and second evaluation results, recommendation information that recommends a modification of an operation parameter of moving bodies 1. FIG. 17 is a diagram illustrating a fourth example of the output screen on information processing terminal 200 according to the embodiment. In the fourth example, the screen displayed on output unit 22 of information processing terminal 200 shows recommendation information. The recommendation information may be displayed on output unit 22 alone or together with a three-dimensional graph as illustrated in FIG. 7.

In the example illustrated in (a) in FIG. 17, output unit 22 displays a table that recommends changing the target area of the mobility service from "Phase 1-5" to "Phase 1-2," a text string indicating the reason for the recommendation, and a map of the target area. In the example illustrated in (b) in FIG. 17, output unit 22 displays a table that recommends changing the operation hours of moving bodies 1 from "10:00 - 16:00" to "12:00 - 21:00" and a text string indicating the reason for the recommendation.

The following describes the processing of generating the recommendation information. In an example, as in the example illustrated in (a) in FIG. 17, recommendation information that recommends changing the target area of moving bodies 1 may be generated. Executor 12 of information processing system 100 executes multiple simulations for respective areas, including the target area included in the operation parameters of moving bodies 1 and areas different from the target area. Evaluator 13 generates multiple evaluation results of evaluating the execution results of these simulations, and extracts an optimal evaluation result in accordance with request information. For example, if the request information is improvement information requesting the improvement of safety in the operation of moving bodies 1, evaluator 13 extracts an evaluation result having the highest score of evaluation in terms of safety among the evaluation results. Based on the evaluation result extracted by evaluator 13, output unit 14 causes output unit 22 of information processing terminal 200 to display recommendation information, which includes the area corresponding to the extracted evaluation result and a text string indicating the reason for recommending the area.

In another example, as in the example illustrated in (b) in FIG. 17, recommendation information that recommends changing the operation hours of moving bodies 1 may be generated. Executor 12 of information processing system 100 executes multiple simulations for respective time periods, including the operation hours included in the operation parameters of moving body 1 and time periods different from the operation hours. Evaluator 13 generates multiple evaluation results of evaluating the execution results of these simulations and extracts an optimal evaluation result in accordance with request information. For example, if the request information indicates improvement information requesting the improvement of economic rationality in the operation of moving bodies 1, evaluator 13 extracts an evaluation result having the highest score of evaluation in terms of economic rationality among the multiple evaluation results. Based on the evaluation result extracted by evaluator 13, output unit 14 causes output unit 22 of information processing terminal 200 to display recommendation information, which includes the operation hours corresponding to the extracted evaluation result and a text string indicating the reason for recommending the operation hours.

In this example, the user can determine, based on the recommendation information, whether to modify an operation parameter of moving bodies 1. This facilitates executing a repeated simulation that accurately reflects the user's request.

Now, in the example illustrated in FIG. 7, in response to the user selecting any one evaluation result by, for example, placing the pointer on the relevant point, information processing system 100 causes output unit 22 of information processing terminal 200 to display risk map 3 corresponding to the selected evaluation result, as in the example illustrated in FIG. 8. However, this is not limiting. For example, in response to the user selecting multiple evaluation results, information processing system 100 may cause output unit 22 to display, side by side, multiple risk maps 3 corresponding to the selected evaluation results.

FIG. 18 is a diagram illustrating a fifth example of the output screen on information processing terminal 200 according to the embodiment. In the fifth example, first, as illustrated in (a) in FIG. 18, the screen displayed on output unit 22 of information processing terminal 200 shows a three-dimensional graph. In response to the user selecting any multiple (here, two) second evaluation results by, for example, placing the pointer on the relevant points, information processing system 100 causes output unit 22 to display, side by side, multiple risk maps 3 corresponding to the second evaluation results selected by the user, as illustrated in (b) in FIG. 18. In the example illustrated in (b) in FIG. 18, risk map 3A at the left corresponds to the second evaluation result indicated by point A22, and risk map 3B at the right corresponds to the second evaluation result indicated by point A23. Risk maps 3 displayed on output unit 22 in this example may be heat maps in which locations where safety risks occur are represented by shading.

In this example, the user can look at multiple risk maps 3 to compare the evaluations in terms of safety in the operation of moving bodies 1. This allows the user to determine how to modify operation parameters of moving bodies 1, thereby facilitating executing a repeated simulation that accurately reflects the user's request. For example, in the example illustrated in (b) in FIG. 18, the user can compare risk maps 3A and 3B to recognize that many safety risks occur for a speed of moving bodies 1 ("mobility speed" in (b) in FIG. 18) of 18 km/h, whereas few safety risks occur for a speed of moving bodies 1 of 10 km/h. The user can therefore readily determine to select, as request information, the second evaluation result corresponding to risk map 3A.

In the example illustrated in FIG. 7, area A1 indicating the first evaluation results and areas A2 and A3 indicating the second evaluation results are all displayed in the same visual mode on output unit 22 of information processing terminal 200. However, this is not limiting. For example, output unit 14 of information processing system 100 may output second evaluation results in a visual mode different from that for first evaluation results.

FIG. 19 is a diagram illustrating a sixth example of the output screen on information processing terminal 200 according to the embodiment. In the sixth example, the screen displayed on output unit 22 of information processing terminal 200 shows a three-dimensional graph similar to the one illustrated in FIG. 7. In the sixth example, however, area A1 indicating first evaluation results, area A2 indicating second evaluation results, and area A3 also indicating second evaluation results are all displayed in different visual modes. Although these groups of points indicating the evaluation results are differentiated from each other by hatching type in the example illustrated in FIG. 19, they may be differentiated in any other manner, for example by color or shape.

In this example, the user can look at the output screen displayed on output unit 22 to visually recognize how the evaluation result changes with each simulation execution. In particular, if the evaluation results of simulations are close to each other, the user can still visually distinguish among the evaluation results.

Output unit 14 of information processing system 100 may determine the visual mode of evaluation results based on the request information referred to by executor 12 in executing simulations. Specifically, in an example, if the request information is improvement information requesting the improvement of safety in the operation of moving bodies 1, output unit 14 may cause output unit 22 of information processing terminal 200 to display the evaluation results in a color dominated by a red color component. In another example, if the request information is improvement information requesting the improvement of economic rationality in the operation of moving bodies 1, output unit 14 may cause output unit 22 to display the evaluation results in a color dominated by a green color component. In still another example, if the request information is improvement information requesting the improvement of convenience in the operation of moving bodies 1, output unit 14 may cause output unit 22 to display the evaluation results in a color dominated by a blue color component.

Output unit 14 of information processing system 100 may cause output unit 22 of information processing terminal 200 to display, in addition to risk map 3, demand map 4 indicating the occurrence patterns of demands in the target area, as illustrated in FIG. 20. The demand map may be displayed on output unit 22 alone or together with risk map 3.

FIG. 20 is a diagram illustrating a seventh example of the output screen on information processing terminal 200 according to the embodiment. In the seventh example, as illustrated in (a) in FIG. 20, the screen displayed on output unit 22 shows demand map 4 corresponding to an evaluation result selected by the user. Demand map 4 shows a map representing the target area and one or more markers 41 indicating locations where demands occur.

In response to the user selecting any marker 41 by, for example, placing the pointer on that marker 41, information processing system 100 causes output unit 22 to display balloon 42 indicating an overview of the demand occurring at the location of that marker 41. Balloon 42 shows, for example, the type of the demand and the time of the occurrence of the demand. Balloon 42 may also show, for example, the type of the delivery item or detailed information on the requester.

In the example illustrated in (a) in FIG. 20, the user selects marker 411 to cause output unit 22 to display balloon 421 indicating an overview of the demand occurring at the location of marker 411. In the example illustrated in (a) in FIG. 20, the user also selects marker 412 to cause output unit 22 to display balloon 422 indicating an overview of the demand occurring at the location of marker 412.

In another example, in response to the user providing predetermined input to information processing terminal 200, information processing system 100 may cause output unit 22 to display demand map 4 as illustrated in (b) in FIG. 20. In the example illustrated in (b) in FIG. 20, as with demand map 4 illustrated in (a) in FIG. 20, demand map 4 shows a map representing the target area and one or more markers 43 indicating locations where demands occur. In response to the user selecting any marker 43 by, for example, placing the pointer on that marker 43, information processing system 100 causes output unit 22 to display balloon 44 indicating the progress of the demand occurring at the location of that marker 43. For example, balloon 44 shows information indicating how a demand that has occurred is proceeding. If the progress of the demand that has occurred indicates "delivered," balloon 44 may show information such as the time of the completion of the delivery, or the delivery route. If the progress of the demand that has occurred indicates "canceled," balloon 44 may show information such as the reason for the cancellation.

In the example illustrated in (b) in FIG. 20, the user selects marker 431 to cause output unit 22 to display balloon 441 indicating the progress of the demand occurring at the location of marker 431. In the example illustrated in (b) in FIG. 20, the user also selects marker 432 to cause output unit 22 to display balloon 442 indicating the progress of the demand occurring at the location of marker 432.

In this example, the user can look at demand map 4 to visually recognize demands that may occur during the operation of the mobility service.

[4. Advantages]

As described above, the information processing method and information processing system 100 according to the embodiment involve: executing, based on operation parameters of moving bodies 1, a simulation of the movements of moving bodies 1 and the transport demands for people or delivery items; and outputting a first evaluation result of evaluating an execution result of the simulation using at least a safety index for the operation of moving bodies 1. A user can thus check the first evaluation result to perform a preliminary examination of a mobility service by taking safety into account.

Further, the information processing method and information processing system 100 according to the embodiment involve: obtaining request information indicating a request about the operation of moving bodies 1, the request being made with respect to the first evaluation result; executing a repeated simulation in accordance with the request information obtained; and outputting a second evaluation result of evaluating an execution result of the repeated simulation using at least the safety index for the operation of moving bodies 1. That is, the information processing method and information processing system 100 according to the embodiment involve repeatedly executing simulations through user interaction. The user can thus check the second evaluation result to further perform a preliminary examination of the mobility service by taking safety into account.

(Other Embodiments)

Although an information processing method and information processing system 100 according to one or plural aspects of the present disclosure have been described above based on the embodiments, the present disclosure is not limited to the embodiment. Various modifications to the embodiments which may be conceived by those skilled in the art, as well as other forms resulting from combinations of one or more elements from different embodiments are also included within the scope of the present disclosure so long as they do not depart from the essence of the present disclosure.

In the embodiment, the first evaluation result and the second evaluation result both include the results of evaluation using the safety index, economic rationality index, and convenience index for the operation of moving bodies 1. However, this is not limiting. For example, the first evaluation result and the second evaluation result may both include at least the result of evaluation using the safety index for the operation of moving body 1, and need not include the results of evaluation using the economic rationality index and the convenience index.

For example, the present disclosure can be realized as a program for causing a processor to execute steps included in the information processing method. Moreover, the present disclosure can be realized as a non-transitory computer-readable recording medium such as a CD-ROM in which such a program is recorded.

When the present disclosure is realized by a program (software), for example, each of the steps is executed by the program being executed by utilizing hardware resources such as the CPU of a computer, memory, and an input/output circuit. In other words, each step is executed by the CPU obtaining data from the memory or the input/output circuit and calculating, or outputting the result of the calculation to the memory or the input/output circuit.

In the foregoing embodiment, the constituent elements included in information processing system 100 are configured by dedicated hardware or may be realized by executing software programs corresponding to those constituent elements. Each constituent element may be realized by a program executor such as a CPU or a processor reading out and executing a software program recorded into a recording medium such as a hard disk or semiconductor memory.

Some or all of the functions of information processing system 100 according to the above embodiment are implemented typically as an LSI circuit which is an integrated circuit. These functions may be implemented individually as single chips or may be implemented with a single chip including some or all of the functions. Further, the manner in which the circuit integration is achieved is not limited to LSI, and it is also possible to use a dedicated circuit or a general purpose processor. It is also possible to employ a Field Programmable Gate Array (FPGA) which is programmable after the LSI circuit has been manufactured, or a reconfigurable processor in which the connections or settings of the circuit cells within the LSI circuit can be reconfigured.

Various modifications to the embodiment of the present disclosure which may be conceived by those skilled in the art are also included within the scope of the present disclosure so long as they do not depart from the essence of the present disclosure.

[Industrial Applicability]

The present disclosure is applicable to systems providing mobility services.

[Reference Signs List]

| | |
|---|---|
| 1 | moving body |
| 3, 3A, 3B | risk map |
| 200 | information processing terminal |
| 21 | input unit |
| 22 | output unit |

**Claims**

1. An information processing method to be executed by a computer, the information processing method comprising:

    executing, based on an operation parameter of a moving body that accommodates a person or a delivery item, a simulation for a movement of the moving body and a transport demand for the person or the delivery item;
    outputting a first evaluation result of evaluating an execution result of the simulation using at least a safety index for an operation of the moving body;
    obtaining request information indicating a request about the operation of the moving body, the request being made with respect to the first evaluation result;
    executing the simulation in accordance with the request information obtained; and
    outputting a second evaluation result of evaluating an execution result of the simulation using at least the safety index for the operation of the moving body.

2. The information processing method according to claim 1, further comprising:
    outputting a risk map indicating an occurrence pattern of a safety risk in the operation of the moving body.

3. The information processing method according to claim 2, wherein
    in obtaining the request information, information indicating the occurrence pattern of the safety risk that has been added to or modified in the risk map is obtained as the request information.

4. The information processing method according to claim 3, further comprising:

    outputting factor information indicating a factor that affects safety in the operation of the moving body, based on the occurrence pattern of the safety risk that has been added to or modified in the risk map, wherein
    in obtaining the request information, the factor information that has been selected or modified is obtained as the request information.

5. The information processing method according to any one of claims 1 to 4, wherein

    in outputting the first evaluation result, a plurality of first evaluation results are outputted, each of the plurality of first evaluation results being the first evaluation result, and
in obtaining the request information, information indicating any one first evaluation result selected from the plurality of first evaluation results is obtained as the request information.

6. The information processing method according to any one of claims 1 to 4, wherein
in each of outputting the first evaluation result and outputting the second evaluation result, the execution result of the simulation is further evaluated using an economic rationality index and a convenience index for the operation of the moving body.

7. The information processing method according to claim 6, wherein
in obtaining the request information, improvement information indicating any one improvement selected from improvement in safety, improvement in economic rationality, and improvement in convenience in the operation of the moving body is obtained as the request information.

8. The information processing method according to claim 7, wherein
in executing the simulation in accordance with the request information, the simulation is executed in accordance with a unique parameter different from the improvement information at a predetermined probability.

9. The information processing method according to claim 8, wherein
when the simulation is executed in accordance with the unique parameter, in outputting the second evaluation result, the second evaluation result of evaluating the execution result of the simulation is output in a visual mode different from a mode for outputting an other second evaluation result.

10. The information processing method according to any one of claims 1 to 4, further comprising:
outputting recommendation information that recommends modification of the operation parameter of the moving body based on the first evaluation result and the second evaluation result.

11. The information processing method according to any one of claims 1 to 4, wherein
in outputting the second evaluation result, the second evaluation result is output in a visual mode different from a mode for outputting the first evaluation result.

12. A program causing a computer to execute the information processing method according to any one of claims 1 to 4.

13. An information processing terminal comprising:

an input unit that receives an input of an operation parameter of the moving body; and
an output unit that outputs the first evaluation result obtained using the information processing method according to any one of claims 1 to 4, the first evaluation result being obtained based on the operation parameter of the moving body received by the input unit, wherein
the input unit further receives an input of the request information, and
the output unit outputs the second evaluation result obtained using the information processing method, the second evaluation result being obtained based on the request information received by the input unit.

# FIG. 1

100

Information
processing
system

### 11
Obtainer

### 12
Executor

### 13
Evaluator

### 14
Output unit

200

Information
processing
terminal

### 21
Input unit

### 22
Output unit

# FIG. 2

| Automobile | A | B | C |
|---|---|---|---|
| A | - | 10 | 20 |
| B | 30 | - | 5 |
| C | 25 | 10 | - |

(a)

(b)

## FIG. 3

## FIG. 4

# FIG. 5

# FIG. 6

Start

Obtain operation parameters of moving bodies — S11

Execute simulation — S12

Output first evaluation result — S13

Obtain request information — S14

Execute repeated simulation — S15

Output second evaluation result — S16

Operation specifications and service specifications determined? — S17

No

Yes

Output operation specifications and service specifications — S18

End

FIG. 7

# FIG. 8

22

31

| Risk | Cost | Value |
|------|------|-------|
| xxx | yyy | zzz |

3

32

321, 32

Object: Bicycle
Frequency: Once in 10,000 times
Degree of injury: High
Mobility speed: 6 km/h
Object speed: 15 km/h

331, 33

# FIG. 9

(a)

ID of selected solution: 11

Select

index = 11
generation = 1
Stores = [SM,TS,NE,YA]
Weekly active users[%] = 4
Business hour[hour] = 8
Number of ADR = 3
Maximum speed of ADR[km/h] = 2
Number of loading capacity = 2
Number of remote operators = 1
Risk count = 86.0
Cost[x10,000yen] = 222.433333
Value[x10,000yen] = 0.84
Waiting time at store[sec] = 0.0
Time stuck on the road[sec] = 586.0
fitness = 39.0
pareto_solution = True

generation: 1

(b)

EP 4 557 195 A1

FIG. 10

## FIG. 11

22

31

| Risk | Cost | Value |
|------|------|-------|
| xxx | yyy | zzz |

3

32

321, 32

322, 32

Object: Automobile
Frequency: Once in 1,000,000 times
Degree of injury: High
Mobility speed: 3 km/h

Object: Bicycle
Frequency: Once in 10,000 times
Degree of injury: ~~High~~ Low
Mobility speed: 6 km/h

332, 33

331, 33

## FIG. 12

| Risk | Cost | Value |
|------|------|-------|
| xxx | yyy | zzz |

Object: Automobile
Frequency: Once in 1,000,000 times
Degree of injury: High
Mobility speed: 3 km/h

Object: Bicycle
Frequency: Once in 10,000 times
Degree of injury: ~~High~~ Low
Mobility speed: 6 km/h

■ Safety factor input
Type: Automobile
Traffic volume: High
Section: Dotted-line section
Object speed: High

OK

■ Safety factor input
Type: Bicycle
Traffic volume: Low
Section: Dashed-line section
Object speed: Medium

OK

# FIG. 13

| Traffic volume / Operation | High | Medium | Low |
|---|---|---|---|
| High | 10,000 | 30,000 | 50,000 |
| Medium | 100,000 | 50,000 | 1,000,000 |
| Low | 200,000 | 500,000 | 100,000,000 |

(a)

| Weight / Speed | High | Medium | Low |
|---|---|---|---|
| High | High | Medium | Medium |
| Medium | High | Medium | Low |
| Light | High | High | Low |

(b)

# FIG. 14

Object: Automobile
Frequency: Once in 2,000,000 times
Degree of injury: Medium
Mobility speed: 3 km/h

## FIG. 15

- OtargetParam = {}; B=0 #Batch size; SP = {} #Unique parameter
- For i = 1 to Total number of simulation parameters

$(1)$
$\begin{cases} \cdot \text{ If User input = R then Execute \{OtargetParam += top(Or); B += 1\} with probability w} \\ \quad \cdot \text{ Else Execute \{OtargetParam += top(Oc); B += 1; SP += top-strip(Oc)\} with probability (1-w)} \end{cases}$

$(2)$
$\begin{cases} \cdot \text{ If User input = C then Execute \{OtargetParam += top(Oc); B += 1\} with probability w} \\ \quad \cdot \text{ Else Execute \{OtargetParam += top(Ov); B += 1; SP += top-strip(Ov)\} with probability (1-w)} \end{cases}$

$(3)$
$\begin{cases} \cdot \text{ If User input = V then Execute \{OtargetParam += top(Ov); B += 1\} with probability w} \\ \quad \cdot \text{ Else Execute \{OtargetParam += top(Or); B += 1; ; SP += top-strip(Or)\} with probability (1-w)} \end{cases}$

- If B >= Batch size then Break
- End for

EP 4 557 195 A1

FIG. 16

# FIG. 17

| Current status | Suggestion |
|---|---|
| Area: Phases 1-5 | Area: Phases 1-2 |

Comment [OPT]

Risk may be improved by avoiding heavy-traffic crossings.

Phase.2
Phase.3
Phase.5
Phase.1
Phase.4

(a)

| Current status | Suggestion |
|---|---|
| Hours: 10:00 - 16:00 | Hours: 12:00 - 21:00 |

Comment [OPT]

Value may be improved by accepting demands during evening hours.

(b)

EP 4 557 195 A1

# FIG. 18

(a)

Mobility speed: 10 Km/h  3A, 3   Mobility speed: 18 Km/h  3B, 3

(b)

# FIG. 19

# FIG. 20

(a)

422, 42 — On-demand type / Order reception time: 7:31

421, 42 — Pre-order type / Desired delivery time: 12:00

411, 41

412, 41

41

4

22

(b)

442, 44 — Status: Canceled

441, 44 — Status: Delivered

431, 43

432, 43

43

4

22

EP 4 557 195 A1

## INTERNATIONAL SEARCH REPORT

| | International application No. |
|---|---|
| | **PCT/JP2023/025730** |

**A.   CLASSIFICATION OF SUBJECT MATTER**

*G06Q 50/30*(2012.01)i
FI:   G06Q50/30

According to International Patent Classification (IPC) or to both national classification and IPC

**B.   FIELDS SEARCHED**

Minimum documentation searched (classification system followed by classification symbols)

G06Q50/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2022-052571 A (JAPAN RESEARCH INSTITUTE LTD.) 04 April 2022 (2022-04-04) entire text, all drawings | 1-13 |
| A | WO 2011/114635 A1 (NEC CORP.) 22 September 2011 (2011-09-22) entire text, all drawings | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2023** | **29 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/025730**

| Patent document cited in search report | | | Publication date (day/month/year) | Patent family member(s) | | | Publication date (day/month/year) |
|---|---|---|---|---|---|---|---|
| JP | 2022-052571 | A | 04 April 2022 | (Family: none) | | | |
| WO | 2011/114635 | A1 | 22 September 2011 | US | 2012/0316773 | A1 | |
| | | | | CN | 102804240 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009030476 A

- JP 2002251597 A

**Non-patent literature cited in the description**

- **MASAYUKI YAMAMOTO**. *Simulation Analysis of Autonomous Ride-Sharing Service in City Area*, 30 June 2023, https://www.denso.com/jp/ja/-/media/-global/business/innov ation/review/24/24-doc-07-paper-02.pdf>